(19) Europäisches Patentamt / European Patent Office / Office européen des brevets

(11) **EP 2 546 912 B1**

(12) **EUROPEAN PATENT SPECIFICATION**

(45) Date of publication and mention
of the grant of the patent:
**23.10.2013 Bulletin 2013/43**

(51) Int Cl.:
***H01M 8/04*** *(2006.01)*

(21) Application number: **12174552.5**

(22) Date of filing: **02.07.2012**

(54) **Fuel cell system**

Brennstoffzellensystem

Système de pile à combustible

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.07.2011 JP 2011154563**

(43) Date of publication of application:
**16.01.2013 Bulletin 2013/03**

(73) Proprietor: **Panasonic Corporation
Osaka 571-8501 (JP)**

(72) Inventors:
• **KUSUMOTO, Junya**
**Chuo-ku, Osaka 540-6207 (JP)**
• **AKIYAMA, Takashi**
**Chuo-ku, Osaka 540-6207 (JP)**

(74) Representative: **TBK
Bavariaring 4-6
80336 München (DE)**

(56) References cited:
DE-A1-102006 045 922    DE-A1-102009 018 848
JP-A- 2004 079 514      JP-A- 2006 073 309

**Description**

FIELD OF THE INVENTION

The invention relates to a fuel cell system, and specifically relates to an improvement for increasing the safety of a fuel cell system.

BACKGROUND OF THE INVENTION

In recent years, studies have been made for using fuel cells as a power source for portable small-size electronic equipment such as notebook personal computers, cellular phones, and personal digital assistants (PDAs). Fuel cells can continuously generate power as long as fuel is supplied. Therefore, using fuel cells as a replacement of secondary batteries, which need to be charged, is expected to further improve the convenience of portable small-size electronic equipment.

There are various fuel cells according to the type of the electrolyte to be used. Among these, polymer electrolyte fuel cells (PEFCs), which operate at low temperatures and have a high output density, are being put into practical use, for example, as a vehicle-mounted power source, or a power source for home cogeneration system. Further, they are expected to be used as a power source for portable small-size electronic equipment.

Among PEFCs, direct oxidation fuel cells (DOFCs) use a fuel which is liquid at room temperature, and outputs electric energy by directly oxidizing the fuel without reforming it into hydrogen. As such, direct oxidation fuel cells require no reformer, and are easy to be miniaturized in size. Most promising direct oxidation fuel cells that can be used as a power source for portable small-size electronic equipment are direct methanol fuel cells (DMFCs) which use methanol as a fuel, because they are more excellent in energy efficiency and power generation output than the other direct oxidation fuel cells.

Polymer electrolyte fuel cells such as DMFCs generally include a cell stack formed by stacking a plurality of unit cells. Each unit cell includes a polymer electrolyte membrane, and an anode and a cathode sandwiching the polymer electrolyte membrane. The anode and cathode each include a catalyst layer and a diffusion layer. To the anode, methanol is supplied as a fuel, and to the cathode, air is usually supplied as an oxidant.

The reactions at the anode and cathode in DMFCs are shown below as the reaction formulae (11) and (12).

$$\text{Anode: } CH_3OH + H_2O \rightarrow CO_2 + 6H^+ + 6e^- \qquad (11)$$

$$\text{Cathode: } (3/2)\, O_2 + 6H^+ + 6e^- \rightarrow 3H_2O \qquad (12)$$

The reaction between the fuel (methanol) and oxygen is shown below as the reaction formula (13) .

$$2CH_3OH + 3O_2 \rightarrow 2CO_2 + 4H_2O \qquad (13)$$

As shown in the formula (13), in order to extract energy, oxygen in the air is consumed even in the fuel cells such as DMFCs. As such, when a fuel cell system is continuously used in a hermetically closed space or in an environment in which ventilation is insufficient, the oxygen concentration in the air might be reduced.

In order to solve this, Patent Document 1 relating to a fuel cell system for automobiles proposes detecting an oxygen concentration, for example, in a car compartment, with an oxygen concentration sensor, and when the detected oxygen concentration drops to a specific level or lower, outputting message or alarm sound to urge ventilation, so that the oxygen concentration in the car compartment can be maintained at a certain level or more.

Patent Document 1: Japanese Laid-Open Patent Publication No. 2006-73309

However, according to Patent Document 1, since the alarm is output depending only on the detection value of the oxygen concentration sensor, a deterioration or malfunction of the oxygen concentration sensor, if any, might result in a failure of outputting the alarm at an appropriate timing.

In view of the above, the invention intends to provide a fuel cell system being capable of accurately detecting the oxygen concentration in the space where the fuel cell system is installed, without relying only on the value detected by the oxygen concentration sensor, and thus having improved safety.

BRIEF SUMMARY OF THE INVENTION

One aspect of the invention is a fuel cell system including:

a fuel cell including an anode to which fuel is supplied, and a cathode to which oxidant is supplied;

an operation controlling unit for controlling operation of the fuel cell;

an oxygen consumption amount detection means for detecting an amount of oxygen consumed in the fuel cell; and

at least one of a first alarm means and a first stop commanding means, the first alarm means being configured to output an alarm when the amount of oxygen consumed is equal to or greater than a first reference value, and the second alarm means being configured to issue a stop command for stopping power generation by the fuel cell to the operation controlling unit when the amount of oxygen consumed is equal to or greater than a second reference value, wherein at least one of the first reference value and the second reference value is set according to a volume of space where the fuel cell system is installed.

According to the fuel cell system of the invention, the oxygen concentration in the space where the fuel cell system is installed is detected accurately without relying only on the value detected by the oxygen concentration sensor, and thus, the safety of the fuel cell system is improved.

While the novel features of the invention are set forth particularly in the appended claims, the invention, both as to organization and content, will be better understood and appreciated, along with other objects and features thereof, from the following detailed description taken in conjunction with the drawings.

BRIEF DESCRIPTION OF THE SEVERAL VIEWS OF THE DRAWING

Fig. 1 is a block diagram showing a schematic configuration of a fuel cell system according to one embodiment of the invention;

Fig. 2 is cross-sectional view showing a schematic configuration of a fuel cell;

Fig. 3 is a flowchart of a controlling method for a fuel cell system according to one embodiment of the invention; and

Fig. 4 is a flowchart of a controlling method for a fuel cell system according to another embodiment of the invention.

DETAILED DESCRIPTION OF THE INVENTION

The invention relates to a fuel cell system including: a fuel cell including an anode to which fuel is supplied, and a cathode to which oxidant is supplied; and an operation controlling unit for controlling operation of the fuel cell. The fuel cell system further includes: an oxygen consumption amount detection means for detecting an amount of oxygen consumed in the fuel cell; and at least one of a first alarm means and a first stop commanding means, the first alarm means being configured to output an alarm when the amount of oxygen consumed is equal to or greater than a first reference value, and the first stop commanding means being configured to issue a stop command for stopping power generation by the fuel cell to the operation controlling unit when the amount of oxygen consumed is equal to or greater than a second reference value. The fuel cell may be a direct oxidation fuel cell such as DMFC, or may be a fuel cell using $H_2$ as a fuel obtained by, for example, fuel reformation.

According to the above configuration, even in a system including an oxygen concentration sensor, it is possible to detect a reduction in oxygen concentration in a space where the system is installed (hereinafter referred to as an "installation space"), not only from the detection value of the oxygen concentration sensor but also from the detected amount of oxygen consumed. As a result, even in the case where an accurate measurement of the oxygen concentration is disabled due to deterioration or malfunction of the oxygen concentration sensor, the system can output an alarm or stop the operation of the fuel cell at an appropriate timing. The safety of the fuel cell system is thus improved. In addition, the user is provided with an opportunity to check the deterioration or malfunction of the oxygen concentration sensor, and therefore, the safety of the fuel cell system is further improved. Here, it is preferable to set the second reference value to be greater than the first reference value, in order to avoid an unnecessary stop of the fuel cell. Alternatively, the second reference value may be set to be equal to the first reference value, so that the operation of the fuel cell is stopped at the same time when an alarm is output.

Further, according to the present fuel cell system, it is possible to output an alarm, without using an oxygen concentration sensor, when the concentration of oxygen in the space where the fuel cell system is installed is reduced to a certain level. Therefore, an alarm can be output with a comparatively inexpensive configuration, without the necessity of using a comparatively expensive oxygen concentration sensor having a complicated structure. Accordingly, with a comparatively inexpensive configuration, it is possible to prevent the oxygen concentration from being reduced to below a certain level, when the fuel cell system is installed in, for example, a hermetically closed space or a space that cannot be ventilated sufficiently.

The first reference value is preferably set on the basis of the volume of the installation space, and the second reference value is also preferably set on the basis of the volume of the installation space. The volume of the installation space may be input by the user or designer, or alternatively, for example, in the case of a hermetically closed space, it may be automatically set by calculating the volume of the installation space on the basis of: the change rate of the oxygen concentration detected by the oxygen concentration sensor; and the amount of oxygen or fuel consumed in the fuel cell.

Further, in order to output an alarm and/or stop the fuel cell at a more appropriate timing, it is preferable to correct at least one of the first and second reference values, according to the ventilation rate β (%) of the installation space. The "ventilation rate β" is a percentage of the air in the installation space having been replaced with fresh air per unit time. In a system provided with an oxygen concentration sensor, the ventilation rate β can be sensed by monitoring the change rate of the oxygen concentration after the operation of the fuel cell was stopped.

The present system preferably includes an oxygen concentration sensor for detecting an oxygen concentration in the installation space, and further includes a second alarm means for outputting an alarm when the detection value of the oxygen concentration sensor drops by a concentration corresponding to the first reference value. By configuring as above, the safety of the fuel cell system can be improved more reliably. The present system may further include a second stop commanding means for issuing a stop command for stopping power generation by the fuel cell to the operation controlling unit when the detection value of the oxygen concentration sensor drops by a concentration corresponding to the second reference value.

The present system preferably includes a reset means for resetting the detected amount of oxygen consumed, when the detection value of the oxygen concentration sensor is increased by a predetermined value CV1 or more after the alarm was output from the first or second alarm means. By configuring as above, for example, when the user performs ventilation in response to the alarm, an unnecessary stop of the fuel cell or an unnecessary repetition of alarm output can be prevented.

The present system may include a prohibition means for prohibiting the fuel cell from resuming operation, while the detection value of the oxygen concentration sensor is not increased by a predetermined value CV2 or more after the stop command was issued from the first or second stop commanding means. By configuring as above, the safety of the fuel cell system can be improved more reliably.

The oxygen consumption amount detection means may include a current sensor for detecting an output current of the fuel cell, a first conversion means for converting the detected output current to an amount of oxygen consumed, and an integration means for integrating the amount of oxygen consumed from the start of power generation by the fuel cell.

Alternatively, the oxygen consumption amount detection means may include a fuel consumption amount detection means for detecting an amount of fuel consumed in the fuel cell; a second conversion means for converting the detected amount of fuel consumed, to an amount of oxygen consumed; and an integration means for integrating the amount of oxygen consumed from the start of power generation by the fuel cell.

The present system may further include a tank for storing fuel to be supplied to the fuel cell, and a remaining fuel amount detection means for detecting an amount of fuel remaining in the tank. The fuel consumption amount detection means can detect an amount of fuel consumed, on the basis of the detected amount of fuel remaining in the tank.

Alternatively, the fuel consumption amount detection means can detect an amount of fuel consumed, on the basis of an amount of fuel supplied to the anode and an amount of fuel discharged from the anode without having been oxidized in the anode. The amount of fuel discharged from the anode can be determined by detecting, for example, a methanol concentration in the effluent with a methanol concentration sensor.

Embodiments of the invention are specifically described below using a direct methanol fuel cell (DMFC) as an example for explanation, with reference to the drawings appended hereto. It should be noted that the invention is not limited to the following embodiments.

(Embodiment 1)

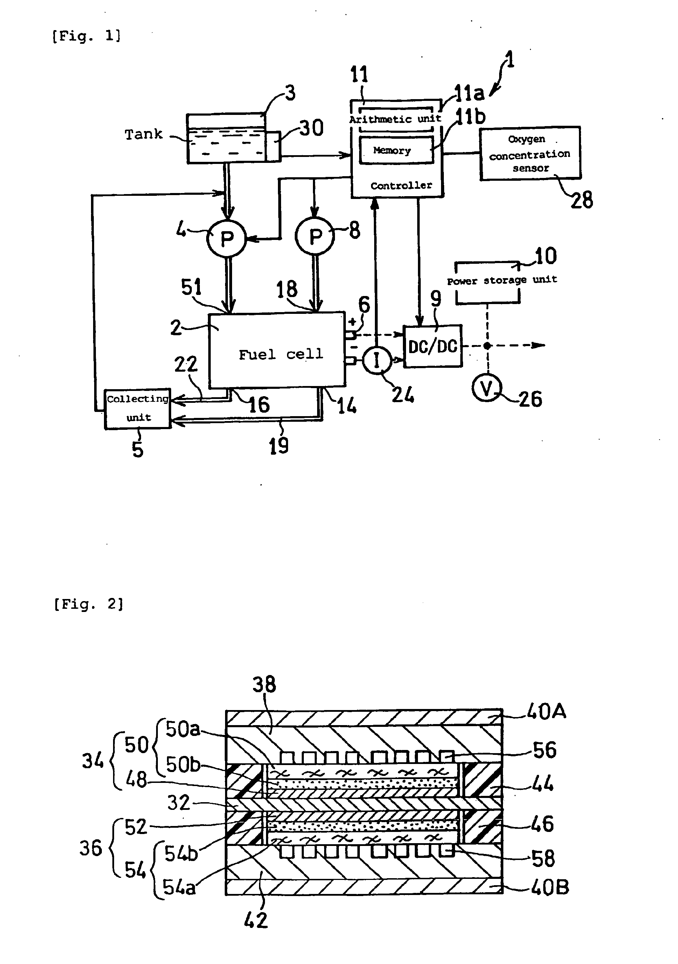

A schematic configuration of a fuel cell system according to one embodiment of the invention is shown in Fig. 1 as a block diagram.

A fuel cell system 1 includes a fuel cell 2, a fuel tank 3 for storing a liquid fuel (methanol), a fuel pump 4 for pumping the liquid fuel stored in the fuel tank 3 into the fuel cell 2, an oxidant pump 8 for supplying an oxidant (air) to the fuel cell 2, and a collecting unit 5 for collecting discharged fluids from the fuel cell 2. The fuel cell 2 has positive and negative electrode external terminals 6 and 7 for outputting the generated electricity.

The fuel cell system 1 further includes a DC/DC converter 9 for converting the output voltage of the fuel cell 2 to a desired voltage and outputting the voltage, a power storage unit 10 for storing at least part of the output power of the fuel cell 2 outputted via the DC/DC converter 9, and a controller 11. The fuel cell system 1 may further include, as needed, a current sensor 24 for detecting an output current of the fuel cell 2, a voltage sensor 26 for detecting an output voltage of the DC/DC converter 9, an oxygen concentration sensor 28 for detecting an oxygen concentration in a space SP where the fuel cell system 1 is installed, and a liquid level sensor 30 for detecting an amount of fuel remaining in the fuel tank 3.

A fuel delivered via the fuel pump 4 is supplied to the fuel cell 2 through a fuel inlet 51. A fuel effluent containing reaction products produced in the fuel cell 2 is discharged through a fuel outlet 16 and delivered through a discharge pipe 22 to the collecting unit 5.

An oxidant delivered via the oxidant pump 8 is supplied to each unit cell in the fuel cell 2 through an oxidant inlet 18. A fluid containing water produced by the reactions in each unit cell in the fuel cell 2 and unconsumed oxidant is discharged through an oxidant outlet 14, and delivered through a discharge pipe 19 to the collecting unit 5.

The discharged fluids from the fuel cell 2 collected in the collecting unit 5 contain unreacted fuel and water, and therefore, are recycled as a fuel. The unreacted fuel and water may be added to the fuel flow from the fuel tank 3, and then supplied to the fuel pump 4.

The collecting unit 5 may be provided with a gas/liquid separation mechanism for separating unreacted fuel and water from gas (e.g., $O_2$ and water vapor).

The oxidant pump 8 may be installed inside a case (not shown) for accommodating the fuel cell 2 or may be installed outside the case. Likewise, the fuel pump 4 may be installed inside or outside the case of the fuel cell 2.

The controller 11 adjusts the input and output voltages of the DC/DC converter 9, and thus has a charge/discharge control function for controlling the charge and discharge of the power storage unit 10. The controller 11 further controls the fuel pump 4 and the oxidant pump 8, and thus has a fuel supply amount control function and an oxidant supply amount control function for controlling the amounts of fuel and oxidant to be supplied to the fuel cell 2. The controller 11 having these functions can thus control the operation of the fuel cell 2. In other words, the controller 11 functions as an operation controlling unit. The control by the controller 11 of the amounts of fuel and oxidant to be supplied may be performed on the basis, for example, detection signals of the current sensor 24 and the voltage sensor 26.

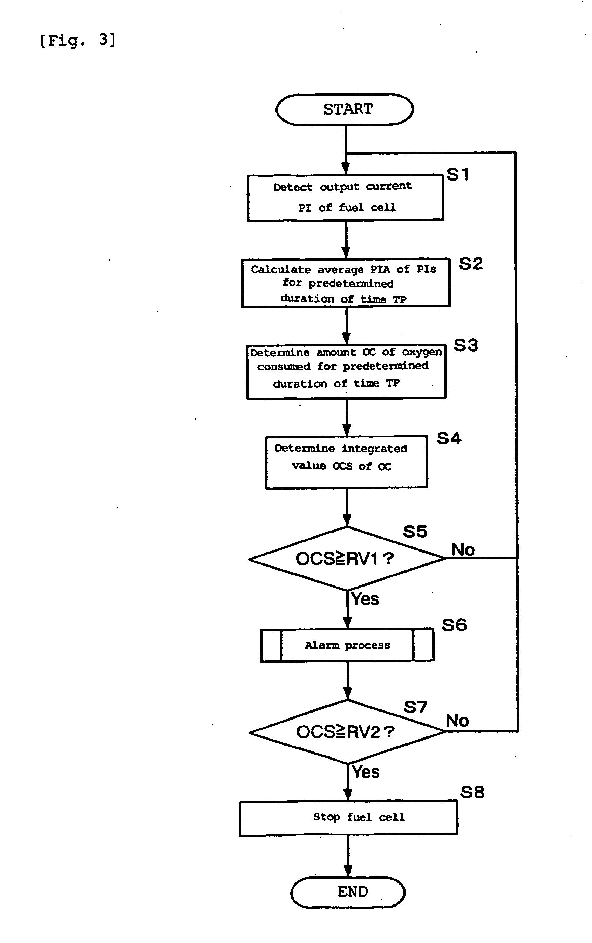

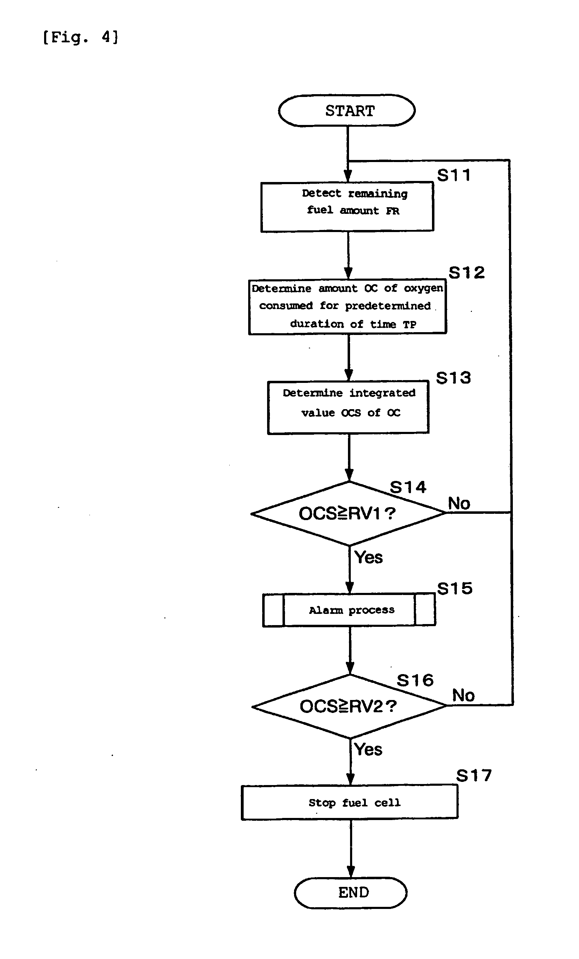

The controller 11 may further include an arithmetic unit 11a and a memory 11 b for performing processing as shown in Figs. 3 and 4. Specifically, the controller 11 may include a central processing unit (CPU), a microcomputer, a micro processing unit (MPU), a main memory, an auxiliary memory, and various interfaces.

The arithmetic unit 11a and the memory 11b may be provided separately from the controller 11. In this case, the arithmetic unit 11a and the memory 11 b may include a CPU, a microcomputer, an MPU, a main memory, an auxiliary memory, and other component parts which are different from those included in the controller 11.

Next, referring to Fig. 2, the structure of the fuel cell included in the system shown in Fig. 1 is described. Although a fuel cell including one cell only is shown in Fig. 2 for ease of explanation, the fuel cell may include a cell stack comprising two or more cells electrically connected to each other in series. The fuel cell 2 included in the fuel cell system 1 shown in Fig. 1, irrespective of Fig. 2, may include two or more cells so that a required output power can be obtained.

The fuel cell shown in the drawing is a direct methanol fuel cell (DMFC), and includes a polymer electrolyte membrane 32, and an anode 34 and a cathode 36 sandwiching the polymer electrolyte membrane 32. The polymer electrolyte membrane 32 has hydrogen ion conductivity. To the anode 34, methanol is supplied as a fuel. To the cathode 36, air is supplied as an oxidant. Acombination of the anode 34, the cathode 36 and the polymer electrolyte membrane 32 interposed therebetween is called a membrane electrode assembly (MEA). One MEA constitutes one cell as mentioned above.

In the layered direction of the anode 34, the polymer electrolyte membrane 32 and the cathode 36, on the outside of the anode 34 (the upper side in the drawing), a plate-like anode-side separator 38 is disposed such that one surface thereof contacts with the anode 34, and on the outside of the anode-side separator 38, an end plate 40A is disposed in contact with the anode-side separator 38. In the above layered direction, on the outside of the cathode 36 (the lower side in the drawing), a plate-like cathode-side separator 42 is disposed such that one surface thereof contacts with the cathode 36, and on the outside of the cathode-side separator 42, an end plate 40B is disposed in contact with the cathode-side separator 42.

In the case where the fuel cell 10 includes a cell stack comprising two or more cells, the end plates 40A and 40B may be disposed only on both ends of the cell stack, instead of being disposed in each cell. Further, the cathode 36 of another cell may be disposed in contact with the other surface of the anode-side separator 38, and the anode 34 of another cell may be disposed in contact with the other surface of the cathode-side separator 42.

A gasket 44 is disposed around the anode 34 so as to be sandwiched between the peripheral portions of the anode-side separator 38 and the polymer electrolyte membrane 32, and a gasket 46 is disposed around the cathode 36 so as to be sandwiched between the peripheral portions of the cathode-side separator 42 and the polymer electrolyte membrane 32. The gaskets 44 and 46 prevent the fuel and the oxidant from leaking out of the anode 34 and the cathode 36, respectively.

The pair of end plates 40A and 40B is clamped with bolts and springs (not shown), so as to apply pressure to the separators and the MEA. The adhesion at the interfaces between the MEA and the anode-side separator 38 and between the MEA and the cathode-side separator 42 is not good. By applying pressure to the separators and the MEA as described above, the adhesion between the MEA and each of the separators is improved. As a result, the contact resistance between the MEA and each of the separators is reduced.

The anode 34 includes an anode catalyst layer 48 and an anode diffusion layer 50 being in contact with each other. The anode catalyst layer 48 is in contact with the polymer electrolyte membrane 32. The anode diffusion layer 50 includes an anode porous substrate 50a having been subjected to water-repellent treatment and being in contact with the anode-side separator 38, and an anode water-repellent layer 50b made of a highly water-repellent material and formed on a surface of the anode porous substrate 50a. The anode water repellent layer 50b is in contact with the anode catalyst layer 48.

The cathode 36 includes a cathode catalyst layer 52 and a cathode diffusion layer 54 being in contact with each other. The cathode catalyst layer 52 is in contact with the polymer electrolyte membrane 32. The cathode diffusion layer 54 includes a cathode porous substrate 54a having been subjected to water-repellent treatment and being in contact with the cathode-side separator 42, and a cathode water-repellent layer 54b made of a highly water-repellent material and formed on a surface of the cathode porous substrate 54a. The cathode water repellent layer 54b is in contact with the cathode catalyst layer 52.

A layered body comprising the polymer electrolyte membrane 32, the anode catalyst layer 48 and the cathode catalyst layer 52 carries out power generation in a fuel cell, and the layered body is called a catalyst coated membrane (CCM). In other words, the MEA is a combination of the CCM and the anode and cathode diffusion layers 50 and 54. The anode and cathode diffusion layers 50 and 54 serve to uniformly disperse the fuel or oxidant supplied to the anode 34 and the cathode 36, as well as to smoothly discharge the reaction products such as water or carbon dioxide.

The anode-side separator 38 has, on its surface contacting the anode porous substrate 50a, a fuel flow channel 56 for supplying fuel to the anode 34. The fuel flow channel 56 is formed of, for example, a recess or groove formed on the above contact surface and being open toward the anode porous substrate 50a.

The cathode-side separator 42 has, on its surface contacting the cathode porous substrate 54a, an air flow channel 58 for supplying oxidant (air) to the cathode 36. The air flow channel 58 is formed of, for example, a recess or groove formed on the above contact surface and being open toward the cathode porous substrate 54a

The fuel flow channel 56 on the anode-side separator 38 and the air flow channel 58 on the cathode-side separator 42 may be formed by, for example, producing separators first, and then grooving the surface of each of the separators. Alternatively, the fuel flow channel 56 and the air flow channel 58 may be formed at the same time when separators are produced by molding, such as injection molding or compression molding.

The anode catalyst layer 48 includes a particulate anode catalyst for accelerating the reaction shown in the above formula (11), and a polymer electrolyte for ensuring the ion conductivity between the anode catalyst layer 48 and the polymer electrolyte membrane 32. Examples of the polymer electrolyte contained in the anode catalyst layer 48 include perfluorosulfonic acid/polytetrafluoroethylene copolymer ($H^+$ type), sulfonated polyethersulfone ($H^+$ type), and aminated polyethersulfone ($OH^-$ type).

The particulate anode catalyst may be supported on a carrier of conductive carbon particles such as carbon black. The particulate anode catalyst may be an alloy of platinum (Pt) and ruthenium (Ru), or a mixture of Pt and Ru. In order to increase the reaction sites of the particulate anode catalyst and improve the reaction speed, the size of the particulate anode catalyst is preferably as small as possible. The average particle size of the particulate anode catalyst may be set to 1 to 20 nm.

The cathode catalyst layer 52 includes a particulate cathode catalyst for accelerating the reaction shown in the above formula (12), and a polymer electrolyte for ensuring the ion conductivity between the cathode catalyst layer 52 and the polymer electrolyte membrane 32. Examples of the polymer electrolyte contained in the cathode catalyst layer 52 are the same as those of the polymer electrolyte contained in the anode catalyst layer 48.

The particulate cathode catalyst may be used alone or supported on a carrier of conductive carbon particles such as carbon black. The particulate anode catalyst may be, for example, Pt or a Pt alloy. Examples of the Pt alloy include an alloy of Pt and a transition metal such as cobalt or iron.

The polymer electrolyte membrane 32 may be made of any material without limitation, as long as the polymer electrolyte membrane 32 can have ion conductivity. For example, various polymer electrolyte materials known in the art may be used as such a material. It should be noted that most of the currently available polymer electrolyte membranes have hydrogen ion conductivity.

A specific example of the polymer electrolyte membrane 32 is a fluoropolymer membrane. The fluoropolymer membrane is exemplified by a polymer membrane containing a perfluorosulfonic acid polymer such as perfluorosulfonic acid/polytetrafluoroethylene copolymer ($H^+$ type). The membrane containing a perfluorosulfonic acid polymer is exemplified by a Nafion membrane (trade name: Nafion®, available from E. I. du Pont de Nemours and Company).

The polymer electrolyte membrane 32 preferably has a function to reduce crossover of fuel (e.g., methanol) used in a fuel cell. Examples of a polymer electrolyte membrane having such a function include: in addition to the above-mentioned fluoropolymer membrane, a membrane containing a fluorine-free hydrocarbon-based polymer, such as sulfonated polyether ether sulfone (S-PEEK); and a composite membrane of an organic material and an inorganic material.

Examples of a porous substrate used for the anode and cathode porous substrates 50a and 54a include: a material containing carbon fibers, such as carbon paper, carbon cloth, and carbon nonwoven fabric (e.g., carbon felt); corrosion resistant metal mesh; and foamed metal.

Examples of a highly water-repellent material used for the anode and cathode water repellent layers 50b and 54b include a fluoropolymer and fluorinated graphite. The fluoropolymer is exemplified by polytetrafluoroethylene (PTFE).

The anode-side and cathode-side separators 38 and 42 are made of, for example, a carbon material, such as graphite. The separator serves as in insulator for preventing cell-to-cell migration of chemical substances, and serves to conduct electrons between cells and electrically connect the cells to each other in series.

A material constituting the gaskets 44 and 46 may be, for example, a fluoropolymer, such as PTFE and tetrafluoroethylene-hexafluoropropylene copolymer (FEP); a synthetic rubber, such as fluorine rubber and ethylene-propylene-diene (EPDM) rubber; and a silicone elastomer. The gaskets 44 and 46 can be made by, for example, providing an opening for accommodating the anode or cathode, at the center portion of a PTFE sheet.

The output voltage per unit cell of a direct oxidation fuel cell is 0.3 to 0.5 V. When a fuel cell stack comprises a plurality of cells electrically connected to each other in series, the output voltage of the fuel cell stack is equal to a value obtained by multiplying the output voltage per unit cell by the number of cells. In general, considerably increasing the number of cells increases the number of component parts and the number of assembling processes of a fuel cell stack, resulting in an increase in production costs. For this reason, the voltage generated from the fuel cell stack is raised by the DC/DC converter 9, and then supplied to an electric device or an inverter for generating alternating current.

Examples of the liquid fuel to be supplied to the fuel cell are methanol and dimethyl ether. Usually, methanol is used by being mixed with water.

The methanol concentration of the liquid fuel is, for example, 1 to 8 mol/L, and preferably 2 to 5 mol/L

The liquid fuel is supplied at a rate of, for example, 0.0138 to 0.556 cm$^3$/min·cm$^2$, and preferably 0.0277 to 0278 cm$^3$/min·cm$^2$. Examples of the oxidant to be supplied to the fuel cell include air, compressed air, oxygen, and a mixed gas containing oxygen.

The oxidant is supplied at a rate of, for example, 11 to 42 cm$^3$/min·cm$^2$, and preferably 13 to 28 cm$^3$/min·cm$^2$ (on an oxygen gas basis) in an environment at room temperature (25°C) and one atmospheric pressure.

A controlling method for a fuel cell system according to one embodiment of the invention is described below, with reference to the flowchart shown in Fig. 3.

Upon activation of the fuel cell 2 to start power generation (START), an output current PI of the fuel cell 2 is detected by the current sensor 24 at intervals of a predetermined time period (e.g., every 0.1 sec) (S1). At this time, reference values RV1 and RV2 may be set automatically on the basis of a volume VR of the space SP. Next, an average PIA of the output currents PIs detected for a predetermined duration of time TP (e.g., for 1 sec) at intervals of the predetermined time period is calculated by the arithmetic unit 11a (S2). Next, the arithmetic unit 11a (a first conversion means therein) computes an amount OC of oxygen consumed for the predetermined duration of time TP (amount consumed for predetermined duration of time) on the basis of the average PIA(S3), and the OC is stored in the memory 11b. The arithmetic unit 11a (an integration means therein) integrates the stored oxygen consumption amount OC, every time when steps S1 to S5 or steps S1 to S7 as describe below are executed, to determine an amount OCS (integrated value) of oxygen consumed from the start of power generation (S4). In the manner as described above, the amount of oxygen consumed from the start of power generation by the fuel cell is detected on the basis of the output current of the fuel cell by an oxygen consumption amount detection means. In the following, an exemplary method for determining an oxygen consumption amount on the basis of an output current is described in detail.

The oxygen consumption amount [L/min] can be calculated stoichiometrically from the formula (1) below.

$$\text{Oxygen consumption amount} = ((((I \times 60)/F)/4) \times (22.4 \times (T/273))) / \eta \qquad \cdots (1),$$

where I is an average current value per unit cell [A], F is Faraday's constant, 4 is a quantity of electric charge at the cathode associated with oxygen consumption, 22.4 is a volume of oxygen (ideal gas) [L/mol], T is an ambient temperature (absolute temperature) [K], and $\eta$ is a fuel utilization rate.

The fuel utilization rate $\eta$ is a coefficient defined by the formula (2) below, taking into consideration the methanol crossover (MCO) from the anode.

$$\eta = i / (i+ix) \qquad \cdots (2),$$

where i is a current value generated by power generation, and ix is a value obtained by converting the amount of fuel consumed by the MCO and made no contribution to the power generation, to a current value.

Next, the arithmetic unit 11 a judges whether the oxygen consumption amount (integrated value) OCS is equal to or greater than a reference value RV1 (a first reference value) (S5) . If the integrated value OCS is smaller than the reference value RV1 ("No" in S5), the flow returns to S1, and the procedures from S1 to S5 are repeated. If the integrated value OCS is equal to or greater than the reference value RV1, an alarm process as described below (S6) is executed by an alarm means, and subsequently, the arithmetic unit 11 a judges whether the integrated value OCS is equal to or greater than a reference value RV2 (a second reference value) (S7) . Here, RV2>RV1.

If the integrated value OCS is smaller than the reference value RV2 ("No" in S7), the flow returns to S1, and the procedures from S1 to S7 are repeated. In this case, S5 and S6 may be skipped. If the integrated value OCS is equal to or greater than the reference value RV2, the arithmetic unit 11a (a stop commanding means therein) issues a stop command for stopping power generation by the fuel cell 2, to the operation controlling unit of the controller 11 (S8). In the process shown in Fig. 3, only an alarm may be output, or alternatively, only a stop command may be issued. In the following, the methods for setting the reference values RV1 and RV2 are described.

For example, when the space SP where the fuel cell system 11 is installed is hermetically closed, the reference value  RV2 can be set as follows. In this case, a maximum consumable amount OVQ of oxygen is determined by multiplying the volume VR of the space SP, by the difference ARB (e.g., 3% (=21%- 18%) ) between a normal oxygen concentration (e.g., 21%) and an oxygen concentration which is considered necessary for ensuring the safety (e.g., 18%) : OVQ =ARB$\times$VR. The fuel cell system 1 can be used safely without stopping power generation by the fuel cell 2, until the integrated value OCS reaches the OVQ value. Therefore, the reference value RV2 can be set on the basis of the OVQ value, with a safety margin included. In short, the reference value RV2 can be defined by the formula (3) below.

$$RV2 = OVQ \times \alpha = ARB \times VR \times \alpha \qquad \cdots (3),$$

where $\alpha$ is $0<\alpha<1$, which is a coefficient determined with a safety margin taken into account. More specifically, $\alpha$ is preferably $1 \geq \alpha \geq 0.8$, more preferably $0.94 \geq \alpha \geq 0.84$, and furthermore preferably $0.92 \geq \alpha \geq 0.88$.

By means of a volume calculation means, the volume VR of the space SP can be calculated on the basis of the oxygen consumption amount (integrated value) OCS and the change rate OVR of the oxygen concentration in the space SP detected by the oxygen concentration sensor 28. In the case of a hermetically closed space, the volume VR can be determined by dividing the OC value by the OVR value.

On the other hand, when the space SP where the fuel cell system 11 is installed is not hermetically closed, the reference value RV2 can be defined by the formula (4) below obtained by adding to the right-hand side of the formula (3) above, a term of a reference value correction amount RVC (= $\beta \times TS \times VR \times 0.21 \times \alpha$) associated with the product of a ventilation rate $\beta$ per unit time in the space SP and a time period TS passed after the start of power generation by a second correction means. By using the reference value RV2 thus determined, even when the fuel cell system 1 is installed in a space SP which is not hermetically closed, it is possible to stop the operation of the fuel cell 2 at an appropriate timing.

$$RV2 = OVQ \times \alpha + RVC = ARB \times VR \times \alpha + RVC \qquad \cdots (4)$$

The ventilation rate $\beta$ may be set by selecting from some preset values of the ventilation rate $\beta$, an appropriate value corresponding to the type of the space SP, or, for example, when the system is provided with the oxygen concentration sensor 28, it may be set automatically by monitoring the detection value of the oxygen concentration sensor 28 after the operation of the fuel cell 2 was stopped, and calculating a ventilation rate $\beta$ from the change rate of the detection value by a ventilation rate calculation means.

By setting as above, it is possible to stop the operation of the fuel cell 2 at the timing when the oxygen concentration in the space SP drops to a predetermined concentration (e.g., 19%).

The reference value RV1 used for the alarm process can be set on the basis of the difference ARS (e.g., 1 % (=21 %-20%)) between a normal oxygen concentration (e.g., 21 %) and a predetermined oxygen concentration set higher than that corresponding to the second reference value RV2 (e.g., 20%). Specifically, the reference value RV1 used when the space SP is hermetically closed can be defined by the formula (5) below, and the reference value RV1 used when the space SP is not hermetically closed can be defined by the formula (6) below.

$$RV1 = ARS \times VR \times \alpha \qquad \cdots (5)$$

$$RV1 = ARS \times VR \times \alpha + RVC \qquad \cdots (6)$$

For example, when the ambient temperature T is 25°C (298 K) and the fuel utilization rate $\eta$ is 83%, given that the average current is 7.2 A, the oxygen consumption amount of each unit cell is 0.033 [L/min] . Provided that the fuel cell 2 includes six cells, the oxygen consumption amount of the fuel cell 2 is 0.198 [L/min] . When the space SP where the fuel cell system 1 is installed is hermetically closed, and the volume VR of the space SP is, for example, 10 m$^3$, the time period it takes for the oxygen concentration in the space SP to drop from the normal concentration, 21%, to the concentration necessary for ensuring the safety, 18%, is $(10 \times 1000 \times (0.2- 0.18)) / 0.198 = 1515$ [min] . The alarm process (S6) and the stop of the fuel cell (S8) can be executed, using the time period thus calculated as a guideline.

The alarm operation in the alarm process may be performed by, for example, displaying a message that reads, for example, "Oxygen concentration might be reduced due to long-term operation", on a user interface, such as a liquid-crystal display, provided on the controller 11 of the fuel cell system 1, or lighting or flashing an alarm lamp, or outputting a voice message as mentioned above from a speaker, or outputting an alarm sound by a buzzer.

The above user interface may be provided with a reset button or the like so that the integrated value OCS can be reset manually when the user responded to the alarm operation and ventilated the space SP.

Alternatively, in the case where the fuel cell system 1 includes the oxygen concentration sensor 28, the arithmetic unit 11a (a reset means therein) may monitor the oxygen concentration detected by the oxygen concentration sensor 28, after the alarm process, so that the integrated value OCS can be reset automatically when the arithmetic unit 11a judges the detected oxygen concentration as having increased by a predetermined value CV1 (e.g., 0.5%) or more, supposing that the space SP has been sufficiently ventilated. It should be noted that an increase of the oxygen concentration to close to 21 % is not used here as the condition for resetting the integrated value OCS. This is for the purpose of enabling the resetting of the integrated value OCS without relying solely on the detection precision of the oxygen concentration sensor 28.

Further, the arithmetic unit 11 a (a prohibition means therein) may monitor the oxygen concentration detected by the oxygen concentration sensor 28, after the stop command was issued to stop the operation of the fuel cell 2, so that the arithmetic unit 11 a prohibits the resumption of operation of the fuel cell 2 by the operation controlling unit while the detected oxygen concentration is not increased by a predetermined value CV2 (e.g., 0.5%) or more, even though the user has performed an operation to instruct the operation controlling unit of the controller 11 to resume the operation of the fuel cell 2. At this time, a message to urge ventilation may also be output.

Furthermore, the alarm process may be forcibly executed by the arithmetic unit 11a (a second alarm means therein) when the oxygen concentration detected by the oxygen concentration sensor 28 drops by a concentration corresponding to the reference value RV1 or more (e.g., drops to 20%), regardless of the result of S5 in Fig. 3. By configuring as above, the safety of the fuel cell system can be improved more reliably. Likewise, the operation of the fuel cell 2 may be forcibly stopped by the arithmetic unit 11a (a second stop commanding means therein) when the oxygen concentration detected by the oxygen concentration sensor 28 drops by a concentration corresponding to the reference value RV2 or more (e.g., drops to 19%), regardless of the result of S7 in Fig. 3.

The safety of the fuel cell system 1 can be easily improved through the above described processing, simply by inputting into the controller 11 or setting automatically and storing in the memory 11 b beforehand, the volume VR of the space SP where the fuel cell system 1 is installed and the ventilation rate $\beta$, if necessary. Specifically, the above data may be input by, for example, directly inputting the volume VR of the space SP and the ventilation rate $\beta$ on the touch panel of the liquid crystal display. Alternatively, several typical volumes VR and ventilation rates $\beta$ may be preset and displayed in a selectable manner, so that the user can change the setting as appropriate by, for example, changing the switch.

(Embodiment 2)

Next, Embodiment 2 of the invention is described with reference to Fig. 4. Fig. 4 is a flowchart showing procedures of a controlling method for a fuel cell system according to Embodiment 2. The basic configuration of the fuel cell system of Embodiment 2 is the same as that of the fuel cell system shown in Fig. 1. Therefore, the difference from Embodiment 1 is mainly described below, using the same reference numerals as used in Fig. 1.

Upon activation of the fuel cell 2 to start power generation (START), an amount of fuel remaining in the fuel tank 3 is detected by the liquid level sensor 30 at intervals of a predetermined time period (e.g., every 1 sec), and the detection value is subtracted from the remaining fuel amount detected the predetermined time period ago, thereby to detect an amount FR of fuel consumed per the predetermined time period (S11). Alternatively, the fuel consumption amount may be detected on the basis of an amount of fuel supplied from the fuel pump and an amount of fuel unconsumed and collected.

Next, an amount OC of oxygen consumed for a predetermined duration of time TP (e.g., for 1 sec) is calculated on the basis of the fuel consumption amount FR (S12) by a second conversion means, and stored in the memory 11b. The stored oxygen consumption amount OC is integrated by the arithmetic unit 11 a every time when steps of S11 to S14 or steps of S11 to S16 as described below are repeated, to determine an amount (integrated value) OCS of oxygen consumed from the start of power generation (S13) by an integration means. In the manner as described above, an amount of oxygen consumed from the start of power generation by the fuel cell is detected on the basis of the amount of fuel consumed in the fuel cell by an oxygen consumption amount detection means. Since the procedures from S14 to S17 in Fig. 4 are the same as those from S5 to S8 in Fig. 3, a detailed description thereof is omitted. In the process shown in Fig. 4 also, only an alarm may be output, or alternatively, only a stop command may be issued. In the following, one exemplary method of determining an oxygen consumption amount on the basis of the fuel consumption amount is described.

The reaction formula (13) above indicates that when two molecules of methanol are consumed, three molecules of oxygen are consumed. Accordingly, the amount of fuel consumed until the oxygen concentration in the space SP drops to 18% can be defined by the formula (7) below:

$$OC = ((((((VR \times 1000)/(22.4 \times (T/273)))) \times (0.21-0.18) \times 2/3) \times M)/\rho)/1000)/\eta \qquad \cdots (7),$$

where M is a molecular weight of methanol [g/mol], and $\rho$ is a density of methanol [g/cm$^3$].

For example, when the volume VR is 10 m$^3$, given that the fuel utilization rate is 83%, and the temperature is 25°C (298 K), the fuel consumption amount is 0.399 [L]. In this case, it is preferable to stop the fuel cell system before the fuel consumption amount exceeds 0.399 [L].

Examples of the method of setting the reference values RV1 and RV2, and the alarm operation in the alarm process in Embodiment 2 are the same as in Embodiment 1. Further, in Embodiment 2 also, the integrated value OCS can be reset, the resumption of operation of the fuel cell 2 can be prohibited under certain conditions, and when the fuel cell system 1 is provided with the oxygen concentration sensor 28, the alarm process and the operation stop of the fuel cell can be forcibly executed on the basis of the detection result of the oxygen concentration sensor 28, as in Embodiment 1.

The invention is specifically described below by way of Examples. It should be noted, however, that the present invention is not limited to the following examples.

EXAMPLE

(Example 1)

A fuel cell was produced in the following manner.

(Formation of anode catalyst layer)

An anode catalyst supporting material including a particulate anode catalyst and a conductive carrier supporting the particulate anode catalyst was prepared. Here, platinum-ruthenium alloy fine particles (Pt:Ru atomic ratio = 1:1) having an average particle size of 5 nm were used as the particulate anode catalyst. Carbon particles having an average primary particle size of 30 nm were used as the carrier. The weight ratio of the Pt-Ru alloy to the total of the Pt-Ru alloy and carbon particles was 80 wt%.

(Formation of cathode catalyst layer)

A cathode catalyst supporting material including a particulate cathode catalyst and a conductive carrier supporting the particulate cathode catalyst was prepared. Here, platinum particles (average particle size: 3 nm) were used as the particulate cathode catalyst. Carbon particles having an average primary particle size of 30 nm were used as the carrier. The weight ratio of the platinum to the total of the platinum particles and carbon particles was 80 wt%.

The polymer electrolyte membrane used here was a strong acidic ion exchange membrane (Nafion® 112, available from E. I. du Pont de Nemours and Company) having a thickness of 50 μm.

(Production of CCM)

(Preparation of anode)

First, 10 g of the anode catalyst supporting material and 70 g of a dispersion containing a strong acidic ion exchange resin (trade name: 5 wt% Nafion® solution, available from E. I. du Pont de Nemours and Company) were mixed with an appropriate amount of water in a stirrer. The resultant mixture was degassed, to give an ink for forming an anode catalyst layer

The ink for forming an anode catalyst layer was applied onto one surface of the polymer electrolyte membrane by spraying it thereto with an air brush, to form a rectangular anode catalyst layer of 40 mm $\times$ 90 mm in size. The size of the anode catalyst layer was adjusted by masking part of the surface of the polymer electrolyte membrane. In spraying the ink for forming an anode catalyst layer, the polymer electrolyte membrane was adsorbed under reduced pressure and fixed onto a metal plate whose surface temperature was adjusted with a heater, so that the ink for forming an anode catalyst layer dried as it was applied. The thickness of the anode catalyst layer was 61 $\mu$m. The amount of Pt-Ru alloy per unit area was 3 mg/cm$^2$.

(Preparation of cathode)

First, 10 g of the cathode catalyst supporting material and 100 g of a dispersion containing a strong acidic ion exchange resin (trade name: 5 wt% Nafion® solution) were mixed with an appropriate amount of water in a stirrer. The resultant mixture was degassed, to give an ink for forming a cathode catalyst layer.

The ink for forming a cathode catalyst layer was applied in the same manner as in preparing an anode catalyst layer, onto the other surface of the polymer electrolyte membrane opposite to the surface with the anode catalyst layer formed thereon. A rectangular cathode catalyst layer of 40 mm $\times$ 90 mm in size was thus formed. The amount of Pt contained in the cathode catalyst layer per unit area was 1 mg/cm$^2$. The anode and cathode catalyst layers were positioned such that the center of each layer (point of intersection of the diagonals) was on a straight line parallel to the thickness direction of the polymer electrolyte membrane.

The CCM was thus produced.

(Production of MEA)

(Preparation of anode porous substrate)

A carbon paper (trade name: TGP-H-090, thickness: approx. 300 $\mu$m, available from Toray Industries Inc.) having been subjected to water-repellent treatment was immersed for 1 minute in a diluted PTFE dispersion (trade name: D-1, available from Daikin Industries, Ltd.). Thereafter, the carbon paper was dried in a hot air dryer at 100°C. The carbon paper after drying was baked in an electric furnace at 270°C for 2 hours. In such a manner, an anode porous substrate having a PTFE content of 10 wt% was prepared.

(Preparation of cathode porous substrate)

A cathode porous substrate having a PTFE content of 10 wt% was prepared in the same manner as in preparing an anode porous substrate, except that a carbon cloth (trade name: Avcarb® 1071 HCB, available from Ballard Material Products, Inc.) was used in place of the carbon paper having been subjected to water-repellent treatment

(Formation of anode water-repellent layer)

Acetylene black powder and a PTFE dispersion (trade name: D-1, available from Daikin Industries, Ltd.) were mixed in a stirred, to give an ink for forming a water-repellent layer in which the content of PTFE in the total solids was 10 wt% and the content of acetylene black in the total solids was 90 wt%. The ink for forming a water-repellent layer was applied onto one surface of the anode porous substrate, by spraying it thereto with an air brush. The ink thus applied was dried in a constant temperature oven at 100°C. The anode porous substrate with the ink for forming a water-repellent layer applied thereon was baked in an electric furnace at 270°C for 2 hours. In such a manner, an anode water-repellent layer was formed on the anode porous substrate.

An anode diffusion layer comprising the anode porous substrate and the anode water-repellent layer was thus prepared.

(Formation of cathode water-repellent layer)

A cathode water-repellent layer was formed on one surface of the cathode porous substrate in the same manner as in forming an anode water-repellent layer. A cathode diffusion layer comprising the cathode porous substrate and the cathode water-repellent layer was thus prepared.

The anode and cathode diffusion layers were each shaped into a rectangle of 40 mm × 90 mm using a cutting die.

Next, the anode diffusion layer was placed on the CCM such that the anode water- repellent layer in the anode diffusion layer was in contact with the anode catalyst layer in the CCM. Likewise, the cathode diffusion layer was placed on the CCM such that the cathode water- repellent layer in the cathode diffusion layer was in contact with the cathode catalyst layer in the CCM.

The resultant layered body was pressed for 1 minute in a heat pressing machine at a temperature of 125°C and a pressure of 5 MPa, so that the anode catalyst layer was bonded to the anode diffusion layer, and the cathode catalyst layer was bonded to the cathode diffusion layer.

In the manner as described above, a membrane-electrode assembly (MEA) comprising the anode, the polymer electrolyte membrane, and the cathode was produced.

(Placement of gasket)

A 0.25-mm-thick ethylene propylene diene (EPDM) rubber sheet was cut into a rectangle of 50 mm × 120 mm. Further, the center portion of the rectangular sheet was cut out in a size of 42 mm × 92 mm. Two gaskets were prepared in this manner.

The gaskets were placed on the MEA such that the anode fitted into the opening of one gasket, and the cathode fitted into the opening of the other gasket

(Production of separator)

A 50 mm × 120 mm rectangular resin-impregnated graphite plate having a thickness of 1.5 mm was prepared as a material for an anode-side separator. The surface of the graphite plate was grooved, thereby to form a fuel flow channel for supplying an aqueous methanol solution to the anode. An inlet of the fuel flow channel was provided on one short side of the separator, and an outlet of the fuel flow channel was provided on the other short side of the separator. An anode-side separator was thus produced.

Likewise, a 50 mm × 120 mm rectangular resin- impregnated graphite plate having a thickness of 2 mm was prepared as a material for a cathode- side separator. The surface of the graphite plate was grooved, thereby to form an air flow channel for supplying air as an oxidant to the cathode. An inlet of the air flow channel was provided on one short side of the separator, and an outlet of the air flow channel was provided on the other short side of the separator. A cathode- side separator was thus produced.

The cross-sectional size of the fuel flow channel and the air flow channel was 1 mm in width and 0.5 mm in depth. The fuel flow channel and the air flow channel were both shaped in a serpentine shape which allows fuel and air to be evenly and uniformly supplied to the anode diffusion layer and the cathode diffusion layer.

The anode-side separator was laminated with the MEA such that the fuel flow channel faces the anode diffusion layer. The cathode-side separator was laminated with the MEA such that the air flow channel faces the cathode diffusion layer.

Six cells each comprising the MEA and the anode-side and cathode-side separators disposed on both sides of the MEA were stacked on each other, and these were sandwiched between a pair of end plates each made of a 1-cm-thick stainless steel plate. Between the end plate and the separator, a current collector plate made of a 2-mm-thick gold-plated copper plate and an insulating plate were disposed. The current collector plate was disposed so as to face the separator, and the insulating plate was disposed so as to face the end plate.

In this state, the end plates were clamped to each other with bolts, nuts, and springs, to hold the MEAs and the separators tightly together.

In the manner as described above, a DMFC comprising a cell stack of six cells and having a size of 50 mm × 120 mm were obtained.

(Production of fuel cell system)

A high pressure air cylinder for supplying compressed air was connected as an oxidant supply unit to the fuel cell 2, via a massflow controller available from Horiba, Ltd. for controlling the flow rate. Specifically, a silicon tube was inserted into the oxidant inlet of each cell, and these silicon tubes were combined into one flow path via a manifold, and the flow path was connected to the massflow controller.

The fuel pump 4 used here was a high precision pump (trade name: Personal pump NP-KX-100, available from Nihon Seimitsu Kagaku Co., Ltd.). The fuel pump 4 was disposed outside the case of the fuel cell 2.

The fuel pump 4 was connected to the inlets of the fuel flow channels provided on the anode-side separators of the unit cells, using a silicone tube and a manifold. The outlets of the fuel flow channels of the unit cells were connected to the fuel outlet 14 of the fuel cell 2, using a silicone tube and a manifold, and the fuel outlet 14 was connected to the collecting unit 5, using a silicone tube.

The inlets of the air flow channels provided on the cathode-side separators of the unit cells were aligned along one side of the fuel cell 2. Air was supplied from the air cylinder via the massflow controller so that the oxidant could be supplied thereto at a predetermined flow rate.

To the anode, an aqueous 4 mol/L methanol solution was supplied at a flow rate of 0.083 $cm^3/min\cdot cm^2$. To the cathode, unhumidified air was supplied at a flow rate of 83.3 $cm^3/min\cdot cm^2$ in the manner as described above. The output current of the fuel cell was allowed to flow into an electron loading device (trade name: PLZ164WA, available from Kikusui Electronics Corp.) via a DC/DC converter, to adjust the current density constant at 200 $mA/cm^2$. The average current was 7.2 A.

A notebook personal computer (trade name: CF-B1 OW, available from Panasonic Corporation) was used as the controller, arithmetic unit, and memory. The output current of the fuel cell was measured using HMS15-P available from LEM Inc. as the current sensor. A program that operates as shown in the flowchart of Fig. 3 (except steps S5 and S6) was created, and the created program was installed in the above computer.

The fuel cell system was placed in a hermetically closed space of 1 $m^3$. The output current of the fuel cell was detected, and on the basis of the detection value, the oxygen consumption amount was calculated, from which the oxygen concentration was determined. The reference value RV2 was set so that the power generation could be stopped when the oxygen concentration in the space dropped to 19%, i.e., a value slightly higher than an oxygen concentration considered necessary for ensuring the safety, 18%. In this example, supposing that the oxygen concentration sensor was malfunctioned, the control based on the detection value of the oxygen concentration sensor was not executed. As a result, the power generation by the fuel cell was stopped 101 minutes after the start of power generation, as the oxygen concentration was judged as having dropped to 19%.

Upon the stop of the power generation, the oxygen concentration in the above space was measured with the oxygen concentration sensor. The measured oxygen concentration was 19.2%.

(Example 2)

The amount of fuel consumed in the fuel cell was measured using an infrared reflectance liquid level meter as the liquid level sensor. A program that operates as shown in the flowchart of Fig. 4 (except steps S14 and S15) was created, and the created program was installed in the above computer.

Power generation of the fuel cell was started in the same manner as in Example 1, except the above. As a result, the power generation by the fuel cell was stopped 68 minutes after the start of power generation. Upon the stop of the power generation, the oxygen concentration in the above space was measured with the oxygen concentration sensor. The measured oxygen concentration was 19.8%.

The fuel cell system of the invention is useful as a power source for portable small-size electronic equipment, such as notebook personal computers, cellular phones, and portable digital assistants (PDAs).

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the scope of the invention.

Disclosed is a fuel cell system including: a fuel cell including an anode to which fuel is supplied, and a cathode to which oxidant is supplied; an operation controlling unit for controlling operation of the fuel cell; an oxygen consumption amount detection means for detecting an amount of oxygen consumed in the fuel cell; and at least one of a first alarm means and a first stop commanding means, the first alarm means being configured to output an alarm when the amount of oxygen consumed is equal to or greater than a first reference value, and the first stop commanding means being configured to issue a stop command for stopping power generation by the fuel cell to the operation controlling unit when the amount of oxygen consumed is equal to or greater than a second reference value.

**Claims**

**1.** A fuel cell system comprising:

a fuel cell including an anode to which fuel is supplied, and a cathode to which oxidant is supplied;

an operation controlling unit for controlling operation of the fuel cell;

an oxygen consumption amount detection means for detecting an amount of oxygen consumed in the fuel cell; and

at least one of a first alarm means and a first stop commanding means, the first alarm means being configured to output an alarm when the amount of oxygen consumed is equal to or greater than a first reference value, and the first stop commanding means being configured to issue a stop command for stopping power generation by the fuel cell to the operation controlling unit when the amount of oxygen consumed is equal to or greater than a second reference value, wherein

at least one of the first reference value and the second reference value is set according to a volume of a space where the fuel cell system is installed.

2. The fuel cell system in accordance with claim 1, further comprising:

an oxygen concentration sensor for detecting an oxygen concentration in the space.

3. The fuel cell system in accordance with claim 2, further comprising:

at least one of a first correction means and a second correction means, the first correction means being configured to correct the first reference value, and the second correction means being configured to correct the second reference value according to a ventilation rate $\beta$ in the space.

4. The fuel cell system in accordance with claim 2 or 3, further comprising:

a volume calculation means for calculating a volume of the space, on the basis of a change rate of a detection value of the oxygen concentration sensor, and the amount of oxygen consumed.

5. The fuel cell system in accordance with claim 3 or 4, further comprising:

a ventilation rate calculation means for calculating the ventilation rate $\beta$, on the basis of a change rate of a detection value of the oxygen concentration sensor while the fuel cell stops operating.

6. The fuel cell system in accordance with any one of claims 2 to 5, further comprising:

at least one of a second alarm means and a second stop commanding means, the second alarm means being configured to output an alarm when the detection value of the oxygen concentration sensor drops by a concentration corresponding to the first reference value, and the second stop commanding means being configured to issue a stop command for stopping power generation by the fuel cell to the operation controlling unit when the detection value of the oxygen concentration sensor drops by a concentration corresponding to the second reference value.

7. The fuel cell system in accordance with any one of claims 2 to 6, further comprising:

a reset means for resetting the detected amount of oxygen consumed, when the detection value of the oxygen concentration sensor is increased by a predetermined value CV1 or more after the alarm was output from the first alarm means, and/or a reset means for resetting the detected amount of oxygen consumed, when the detection value of the oxygen concentration sensor is increased by the predetermined value CV1 or more after the alarm was output from the second alarm means.

8. The fuel cell system in accordance with any one of claims 2 to 7, further comprising:

a prohibition means for prohibiting the fuel cell from resuming operation, while the detection value of the oxygen concentration sensor is not increased by a predetermined value CV2 or more after the stop command was issued from at least one of the first stop commanding means and the second stop commanding means.

9. The fuel cell system in accordance with any one of claims 1 to 8, wherein the oxygen consumption amount detection means comprises

a current sensor for detecting an output current of the fuel cell,
a first conversion means for converting the detected output current to an amount of oxygen consumed, and
an integration means for integrating the amount of oxygen consumed from the start of power generation by the fuel cell.

10. The fuel cell system in accordance with any one of claims 1 to 9, wherein the oxygen consumption amount detection means comprises:

a fuel consumption amount detection means for detecting an amount of fuel consumed in the fuel cell;
a second conversion means for converting the detected amount of fuel consumed, to an amount of oxygen consumed; and
an integration means for integrating the amount of oxygen consumed from the start of power generation by the fuel cell.

11. The fuel cell system in accordance with claim 10, further comprising:

a tank for storing fuel to be supplied to the fuel cell; and
a remaining fuel amount detection means for detecting an amount of fuel remaining in the tank, wherein the fuel consumption amount detection means detects the amount of fuel consumed, on the basis of the detected amount of fuel remaining in the tank.

12. The fuel cell system in accordance with claim 10, wherein the fuel consumption amount detection means detects the amount of fuel consumed, on the basis of an amount of fuel supplied to the anode and an amount of fuel discharged from the anode without having been oxidized in the anode.

**Patentansprüche**

1. Brennstoffzellensystem mit:

einer Brennstoffzelle einschließlich einer Anode, zu der Brennstoff zugeführt wird, und einer Kathode, zu der ein Oxidationsmittel zugeführt wird;
einer Betriebssteuereinheit zum Steuern des Betriebs der Brennstoffzelle;
einem Sauerstoffverbrauchsmengenerfassungsmittel zum Erfassen einer Menge von in der Brennstoffzelle verbrauchtem Sauerstoff; und
zumindest einem ersten Alarmmittel und einem ersten Stoppbefehlsmittel, wobei das erste Alarmmittel dazu konfiguriert ist, einen Alarm dann auszugeben, wenn die Menge von verbrauchtem Sauerstoff gleich oder größer als ein erster Bezugswert ist, und wobei das erste Stoppbefehlsmittel dazu konfiguriert ist, einen Stoppbefehl zum Stoppen der Stromerzeugung durch die Brennstoffzelle zu der Betriebssteuereinheit auszugeben, wenn die Menge des verbrauchten Sauerstoffs gleich oder größer als ein zweiter Bezugswert ist, wobei
zumindest einer von dem ersten Bezugswert und dem zweiten Bezugswert gemäß einem Volumen eines Raums festgelegt ist, in welchem das Brennstoffzellensystem installiert ist.

2. Brennstoffzellensystem gemäß Anspruch 1, ferner mit:

einem Sauerstoffkonzentrationssensor zum Erfassen einer Sauerstoffkonzentration in dem Raum.

3. Brennstoffzellensystem gemäß Anspruch 2, ferner mit:

zumindest einem ersten Korrekturmittel und/oder einem zweiten Korrekturmittel, wobei das erste Korrekturmittel dazu konfiguriert ist, den ersten Bezugswert zu korrigieren, und wobei das zweite Korrekturmittel dazu konfiguriert ist, den zweiten Bezugswert gemäß einer Belüftungsrate $\beta$ in dem Raum zu korrigieren.

4. Brennstoffzellensystem gemäß Anspruch 2 oder 3, ferner mit:

einem Volumenberechnungsmittel zum Berechnen eines Volumens des Raums auf Grundlage einer Änderungsrate eines Erfassungswerts des Sauerstoffkonzentrationssensors und der Menge des verbrauchten Sauerstoffs.

**5.** Brennstoffzellensystem gemäß Anspruch 3 oder 4, ferner mit:

einem Belüftungsratenberechnungsmittel zum Berechnen der Belüftungsrate $\beta$ auf der Grundlage einer Änderungsrate eines Erfassungswerts des Sauerstoffkonzentrationssensors während des Betriebsstopps der Brennstoffzelle.

**6.** Brennstoffzellensystem gemäß einem der Ansprüche 2 bis 5, ferner mit:

zumindest einem zweiten Alarmmittel und/oder einem zweiten Stoppbefehlsmittel, wobei das zweite Alarmmittel dazu konfiguriert ist, einen Alarm dann auszugeben, wenn der Erfassungswert des Sauerstoffkonzentrationssensors um eine dem ersten Bezugswert entsprechende Konzentration abfällt, und das zweite Stoppbefehlsmittel dazu konfiguriert ist, einen Stoppbefehl zum Stoppen der Stromerzeugung durch die Brennstoffzelle zu der Betriebssteuereinheit auszugeben, wenn der Erfassungswert des Sauerstoffkonzentrationssensors um eine dem zweiten Bezugswert entsprechende Konzentration abfällt.

**7.** Brennstoffzellensystem gemäß einem der Ansprüche 2 bis 6, ferner mit:

einem Zurücksetzungsmittel zum Zurücksetzen der erfassten Menge des verbrauchten Sauerstoffs, wenn der Erfassungswert des Sauerstoffkonzentrationssensors um einen vorbestimmten Wert CV1 oder mehr nach der Ausgabe des Alarms von dem ersten Alarmmittel erhöht ist, und/oder einem Zurücksetzungsmittel zum Zurücksetzen der erfassten Menge des verbrauchten Sauerstoffs, wenn der Erfassungswert des Sauerstoffkonzentrationssensors um den vorbestimmten Wert CV1 oder mehr nach dem Ausgeben des Alarms von dem zweiten Alarmmittel zugenommen hat.

**8.** Brennstoffzellensystem gemäß einem der Ansprüche 2 bis 7, ferner mit:

einem Verhinderungsmittel zum Verhindern der Wiederaufnahme des Betriebs der Brennstoffzelle während der Erfassungswert des Sauerstoffkonzentrationssensors nach der Ausgabe des Stoppbefehls von zumindest dem ersten Stoppbefehlsmittel und/oder dem zweiten Stoppbefehlsmittel nicht um einen vorbestimmten Wert CV2 zugenommen hat.

**9.** Brennstoffzellensystem gemäß einem der Ansprüche 1 bis 8, wobei das Sauerstoffverbrauchsmengenerfassungsmittel Folgendes aufweist:

einen Stromsensor zum Erfassen eines Ausgabestroms der Brennstoffzelle,
ein erstes Umwandlungsmittel zum Umwandeln des erfassten Ausgabestroms in eine Menge des verbrauchten Sauerstoffs, und
ein Integrationsmittel zum Integrieren der Menge des verbrauchten Sauerstoffs ab dem Start der Leistungserzeugung durch die Brennstoffzelle.

**10.** Brennstoffzellensystem gemäß einem der Ansprüche 1 bis 9, wobei das Sauerstoffverbrauchsmengenerfassungsmittel Folgendes aufweist:

ein Brennstoffverbrauchsmengenerfassungsmittel zum Erfassen einer Menge des in der Brennstoffzelle verbrauchten Brennstoffs;
ein zweites Umwandlungsmittel zum Umwandeln der erfassten Menge des verbrauchten Brennstoffs in eine Menge des verbrauchten Sauerstoffs; und
ein Integrationsmittel zum Integrieren der Menge des seit dem Start der Leistungserzeugung durch die Brennstoffzelle verbrauchten Sauerstoffs.

**11.** Brennstoffzellensystem gemäß Anspruch 10, ferner mit:

einem Tank zum Speichern des zu der Brennstoffzelle zuzuführenden Brennstoffs; und
einem Brennstoffrestmengenerfassungsmittel zum Erfassen einer Brennstoffrestmenge in dem Tank, wobei das Brennstoffverbrauchsmengenerfassungsmittel die Menge des verbrauchten Brennstoffs auf Grundlage der erfassten Brennstoffrestmenge in dem Tank erfasst.

**12.** Brennstoffzellensystem gemäß Anspruch 10, wobei das Brennstoffverbrauchsmengenerfassungsmittel die Menge des verbrauchten Brennstoffs auf Grundlage einer Menge von zu der Anode zugeführtem Brennstoff und einer Menge von Brennstoff erfasst, der von der Anode abgegeben wurde, ohne in der Anode oxidiert zu werden.

**Revendications**

1. Système de pile à combustible comprenant :

   une pile à combustible comportant une anode à laquelle un combustible est alimenté, et une cathode à laquelle un oxydant est alimenté ;
   une unité de commande de fonctionnement pour commander le fonctionnement de la pile à combustible ;
   un moyen de détection de quantité de consommation d'oxygène pour détecter une quantité d'oxygène consommé dans la pile à combustible ; et
   au moins l'un d'un premier moyen d'avertissement et d'un premier moyen d'instruction d'arrêt, le premier moyen d'avertissement étant configuré pour délivrer en sortie un avertissement lorsque la quantité d'oxygène consommé est supérieure ou égale à une première valeur de référence, et le premier moyen d'instruction d'arrêt étant configuré pour émettre une instruction d'arrêt pour arrêter la génération de puissance par la pile à combustible à l'unité de commande de fonctionnement lorsque la quantité d'oxygène consommé est supérieure ou égale à une deuxième valeur de référence, où
   au moins l'une de la première valeur de référence et de la deuxième valeur de référence est réglée en fonction d'un volume d'un espace où le système de pile à combustible est installé.

2. Système de pile à combustible selon la revendication 1, comprenant en outre :

   un capteur de concentration d'oxygène pour détecter une concentration d'oxygène dans l'espace.

3. Système de pile à combustible selon la revendication 2, comprenant en outre :

   au moins l'un d'un premier moyen de correction et d'un deuxième moyen de correction, le premier moyen de correction étant configuré pour corriger la première valeur de référence, et le deuxième moyen de correction étant configuré pour corriger la deuxième valeur de référence en fonction d'un taux de ventilation dans l'espace.

4. Système de pile à combustible selon la revendication 2 ou 3, comprenant en outre :

   un moyen de calcul de volume pour calculer un volume de l'espace, sur la base d'un taux de changement d'une valeur de détection du capteur de concentration d'oxygène, et de la quantité d'oxygène consommé.

5. Système de pile à combustible selon la revendication 3 ou 4, comprenant en outre :

   un moyen de calcul de taux de ventilation pour calculer le taux de ventilation $\beta$, sur la base d'un taux de changement d'une valeur de détection du capteur de concentration d'oxygène lors de l'arrêt de fonctionnement de la pile à combustible.

6. Système de pile à combustible selon l'une quelconque des revendications 2 à 5, comprenant en outre :

   au moins l'un d'un deuxième moyen d'avertissement et d'un deuxième moyen d'instruction d'arrêt, le deuxième moyen d'avertissement étant configuré pour délivrer en sortie un avertissement lorsque la valeur de détection du capteur de concentration d'oxygène diminue d'une concentration correspondant à la première valeur de référence, et le deuxième moyen d'instruction d'arrêt étant configuré pour émettre une instruction d'arrêt pour arrêter la génération de puissance par la pile à combustible à l'unité de commande de fonctionnement lorsque la valeur de détection du capteur de concentration d'oxygène diminue d'une concentration correspondant à la deuxième valeur de référence.

7. Système de pile à combustible selon l'une quelconque des revendications 2 à 6, comprenant en outre :

   un moyen de réinitialisation pour réinitialiser la quantité détectée d'oxygène consommé, lorsque la valeur de détection du capteur de concentration d'oxygène augmente d'une valeur prédéterminée CV1 ou plus après que l'avertissement a été délivré en sortie à partir du premier moyen d'avertissement, et/ou un moyen de réinitialisation pour réinitialiser la quantité détectée d'oxygène consommé, lorsque la valeur de détection du capteur de concentration d'oxygène augmente de la valeur prédéterminée CV1 ou plus après que l'avertissement a été délivré en sortie à partir du deuxième moyen d'avertissement.

8. Système de pile à combustible selon l'une quelconque des revendications 2 à 7, comprenant en outre :

un moyen d'interdiction pour empêcher la pile à combustible de reprendre le fonctionnement, tandis que la valeur de détection du capteur de concentration d'oxygène n'augmente pas d'une valeur prédéterminée CV2 ou plus après que l'instruction d'arrêt a été émise à partir d'au moins l'un du premier moyen d'instruction d'arrêt et du deuxième moyen d'instruction d'arrêt.

9. Système de pile à combustible selon l'une quelconque des revendications 1 à 8, dans lequel le moyen de détection de quantité de consommation d'oxygène comprend
un capteur de courant pour détecter un courant de sortie de la pile à combustible,
un premier moyen de conversion pour convertir le courant de sortie détecté en une quantité d'oxygène consommé, et
un moyen d'intégration pour intégrer la quantité d'oxygène consommé dès le début de génération de puissance par la pile à combustible.

10. Système de pile à combustible selon l'une quelconque des revendications 1 à 9, dans lequel le moyen de détection de quantité de consommation d'oxygène comprend :

un moyen de détection de quantité de consommation de combustible pour détecter une quantité de combustible consommé dans la pile à combustible ;
un deuxième moyen de conversion pour convertir la quantité détectée de combustible consommé, en une quantité d'oxygène consommé ; et
un moyen d'intégration pour intégrer la quantité d'oxygène consommé dès le début de génération de puissance par la pile à combustible.

11. Système de pile à combustible selon la revendication 10, comprenant en outre :

un réservoir pour stocker le combustible devant être alimenté à la pile à combustible ;
et un moyen de détection de quantité de combustible restante pour détecter une quantité de combustible restant dans le réservoir, où
le moyen de détection de quantité de consommation de combustible détecte la quantité de combustible consommé, sur la base de la quantité détectée de combustible restant dans le réservoir.

12. Système de pile à combustible selon la revendication 10, dans lequel le moyen de détection de quantité de consommation de combustible détecte la quantité de combustible consommé, sur la base d'une quantité de combustible alimentée à l'anode et d'une quantité de combustible déchargée de l'anode sans avoir été oxydée dans l'anode.

[Fig. 1]

[Fig. 2]

[Fig. 3]

```
              ┌──────────────┐
              │    START     │
              └──────┬───────┘
                     │
        ┌────────────▼─────────────┐  S1
        │   Detect output current  │
        │      PI of fuel cell     │
        └────────────┬─────────────┘
                     │
        ┌────────────▼─────────────┐  S2
        │  Calculate average PIA   │
        │      of PIs for          │
        │     predetermined        │
        │   duration of time TP    │
        └────────────┬─────────────┘
                     │
        ┌────────────▼─────────────┐  S3
        │ Determine amount OC of   │
        │  oxygen consumed for     │
        │     predetermined        │
        │   duration of time TP    │
        └────────────┬─────────────┘
                     │
        ┌────────────▼─────────────┐  S4
        │  Determine integrated    │
        │     value OCS of OC      │
        └────────────┬─────────────┘
                     │
                  ╱──▼──╲   S5      No
              ◄  OCS≧RV1 ?  ►───────►
                  ╲─────╱
                     │ Yes
        ┌────────────▼─────────────┐  S6
        │      Alarm process       │
        └────────────┬─────────────┘
                     │
                  ╱──▼──╲   S7      No
              ◄  OCS≧RV2 ?  ►───────►
                  ╲─────╱
                     │ Yes
        ┌────────────▼─────────────┐  S8
        │      Stop fuel cell      │
        └────────────┬─────────────┘
                     │
              ┌──────▼───────┐
              │     END      │
              └──────────────┘
```

[Fig. 4]

```
                  ┌──────────┐
                  │  START   │
                  └────┬─────┘
                       │
                       ▼                    S11
              ┌─────────────────┐
              │ Detect remaining│
              │ fuel amount FR  │
              └────────┬────────┘
                       │
                       ▼                    S12
        ┌──────────────────────────────┐
        │ Determine amount OC of oxygen │
        │ consumed for predetermined    │
        │ duration of time TP           │
        └───────────────┬───────────────┘
                       │
                       ▼                    S13
              ┌─────────────────┐
              │ Determine       │
              │ integrated      │
              │ value OCS of OC │
              └────────┬────────┘
                       │
                       ▼         S14
                   ◇ OCS≧RV1? ◇──── No ──┐
                       │ Yes             │
                       ▼         S15      │
              ┤ Alarm process ├          │
                       │                  │
                       ▼         S16      │
                   ◇ OCS≧RV2? ◇──── No ──┤
                       │ Yes             │
                       ▼         S17      │
              ┌─────────────────┐        │
              │ Stop fuel cell  │        │
              └────────┬────────┘        │
                       │                  │
                       ▼                  │
                  ┌──────────┐            │
                  │   END    │            │
                  └──────────┘            │
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2006073309 A